# EUROPÄISCHE PATENTSCHRIFT

(11) **EP 0 911 510 B1**
(45) Veröffentlichungstag und Bekanntmachung des Hinweises auf die Patenterteilung: **27.11.2002**
(21) Anmeldenummer: 98117302.4
(22) Anmeldetag: 12.09.1998
(51) Int. Cl.: F02M 25/07

(54) **Brennkraftmaschine mit einer Abgasrückführ-Vorrichtung, insbesondere Diesel-Brennkraftmaschine**
Combustion engine with EGR device, especially diesel engine
Moteur à combustion avec dispositif de recirculation de gaz d'échappement, en particulier moteur diesel

(30) Priorität: 25.10.1997 DE 19747245
(43) Veröffentlichungstag der Anmeldung: 28.04.1999
(73) Patentinhaber: Bayerische Motoren Werke Aktiengesellschaft, 80788 München (DE)
(72) Erfinder: Reisinger, Walter, 4311 Schwertberg (AT); Pollhammer, Rainer, 4040 Linz (AT); Werndle, Thomas, 82544 Aufhofen (DE)

(56) Entgegenhaltungen:
- GB-A- 2 125 892
- PATENT ABSTRACTS OF JAPAN vol. 1995, no. 11, 26. Dezember 1995 (1995-12-26) & JP 07 224727 A (NISSAN DIESEL MOTOR CO LTD), 22. August 1995 (1995-08-22)
- PATENT ABSTRACTS OF JAPAN vol. 018, no. 660 (M-1722), 14. Dezember 1994 (1994-12-14) & JP 06 257518 A (MAZDA MOTOR CORP), 13. September 1994 (1994-09-13)
- PATENT ABSTRACTS OF JAPAN vol. 018, no. 341 (M-1629), 28. Juni 1994 (1994-06-28) & JP 06 081720 A (TOYOTA AUTOM LOOM WORKS LTD), 22. März 1994 (1994-03-22)
- PATENT ABSTRACTS OF JAPAN vol. 014, no. 491 (M-1040), 25. Oktober 1990 (1990-10-25) & JP 02 201016 A (MAZDA MOTOR CORP), 9. August 1990 (1990-08-09)

## Beschreibung

Die Erfindung bezieht sich nach dem Oberbegriff des Patentanspruches 1 auf eine Brennkraftmaschine mit einer Abgasrückführ-Vorrichtung, insbesondere Diesel-Brennkraftmaschine, wobei eine Abgasanlage und eine Ansauganlage der Brennkraftmaschine über eine Abgasrückführ-Leitung in Verbindung stehen.

Bekanntlich dient eine derartige, z. B. aus der DE-A 41 13 005 bekannte Abgasrückführ-Vorrichtung einer NOₓ-Reduktion. Das in die ansaugseitige Frischluft rückgeführte Abgas weist je nach Rückführungs-Rate mehr oder weniger hohe Druckschwankungen bzw. Pulsationen auf, wodurch der Ansaugtrakt bzw. die Ansauganlage zu hörbaren Schwingungen angeregt wird, die in nachteiliger Weise als störendes Brummen wahrnehmbar sind.

Zur Unterdrückung derart störender Brummschwingungen kann in der Ansauganlage beispielsweise ein aus der DE-A 43 36 112 bekannter Nebenschluß-Resonator vorgesehen sein, der allerdings für die gewünschte Wirkung einen erheblichen Bauraumbedarf aufweist.

Abgasseitig angeordnete Helmholtz-Resonatoren sind beispielsweise aus der DE-A 43 16 778 bekannt, die hierbei der Dämpfung hochfrequenter Schwingungen in Zusatzluftleitungen zu gruppenweise angeordneten Abgaskrümmern dienen.

Der Erfindung liegt die Aufgabe zugrunde, bei einer gattungsgemäßen Brennkraftmaschine durch Druckschwankungen bzw. Pulsationen hervorgerufene Brummschwingungen in der Ansauganlage zu unterdrücken.

Diese Aufgabe ist gemäß dem Patentanspruch 1 dadurch gelöst, daß die Abgasrückführ-Leitung mit einem Helmholtz-Resonator ausgerüstet ist.

Dieser insbesondere für tiefe Frequenzen relativ voluminös auszubildende Helmholtz-Resonator ist in Ausgestaltung der Erfindung als ein am freien Ende geschlossenes Reflexionsrohr gestaltet, wobei in weiterer Ausgestaltung das als ein Blindrohr gestaltete Reflexionsrohr in seiner Länge etwa ¼ der Wellenlänge der zu dämpfenden Frequenz entspricht und in seinem Durchmesser etwa dem der Abgasrückführ-Leitung.

Zur vorteilhaft platzsparenden Anordnung des relativ voluminösen Reflexionsrohres an der Brennkraftmaschine wird in weiterer Ausgestaltung vorgeschlagen, daß die Abgasrückführ-Leitung von einer Längsseite zur anderen Längsseite der Brennkraftmaschine vor einer deren Stirnseiten verlaufend angeordnet ist, wobei ein freier Winkelabschnitt des abgewinkelt gestalteten Reflexionsrohres der abgasseitigen Längsseite der Brennkraftmaschine benachbart verlaufend angeordnet ist.

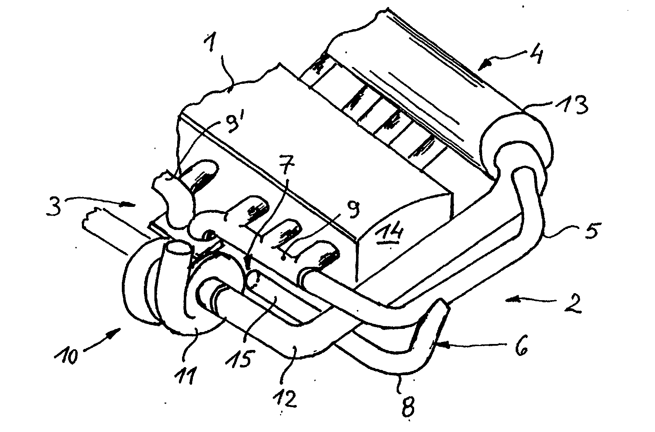

Die Erfindung ist anhand eines in der Zeichnung dargestellten Beispiels beschrieben.

Eine Brennkraftmaschine 1, vorzugsweise ein Dieselmotor, ist mit einer Abgasrückführ-Vorrichtung 2 ausgerüstet, wobei eine Abgasanlage 3 und eine Ansauganlage 4 der Brennkraftmaschine 1 über eine Abgasrückführ-Leitung 5 in Verbindung stehen.

Um die bei der Abgasrückführung in der Abgasrückführ-Leitung 5 auftretenden, die Ansauganlage 4 zu störenden Brummfrequenzen anregenden Pulsationen zu dämpfen, ist die Abgasrückführ-Leitung 5 erfindungsgemäß mit einem Helmholtz-Resonator 6 ausgerüstet.

Ein baulich einfacher und im Hinblick auf den Platzbedarf leicht unterzubringender Helmholtz-Resonator 6 ist als ein am freien Ende 7 geschlossenes Reflexionsrohr 8 gestaltet.

Das als ein Blindrohr gestaltete Reflexionsrohr 8 entspricht in seiner Länge etwa ¼ der Wellenlänge der zu dämpfenden Brumm-Frequenz und ist ferner zur Erzielung eines ausreichenden Volumens für tiefe Frequenzen in seinem Durchmesser etwa dem der Abgasrückführ-Leitung 5 entsprechend gestaltet.

Wie aus der einzigen Zeichnung ferner ersichtlich, ist die Abgasrückführ-Leitung 5 in ihrem Durchmesser ferner einem Abgaskrümmer 9 der Abgasanlage 3 entsprechend angepaßt. Die zwei Gruppen von Zylindern der Brennkraftmaschine 1 zugeordneten Abgaskrümmer 9 und 9' führen das Abgas einem Abgasturbolader 10 zu, dessen Ladereinheit 11 über eine Ladeleitung 12 mit einem Luftsammler 13 der Ansauganlage 4 in Verbindung steht. Die vorzugsweise in die Ladeluftleitung 12 vor deren Eintritt in den Luftsammler 13 mündende Abgasrückführ-Leitung 5 steht mit einem abgewinkelt gestalteten Reflexionsrohr 8 in gasführender Verbindung.

Wie aus der Figur weiter ersichtlich, ist die Abgasrück-Leitung 5 von einer Längsseite zur anderen Längsseite der Brennkraftmaschine 1 vor einer deren Stirnseiten 14 verlaufend angeordnet, wobei das abgewinkelt gestaltete Reflexionsrohr 8 dazu dient, daß ein freier Winkelabschnitt 15 des Reflexionsrohres 8 der abgasseitigen Längsseite der Brennkraftmaschine 1 vorteilhaft platzsparend benachbart verlaufend angeordnet ist.

## Patentansprüche

1. Brennkraftmaschine mit einer Abgasrückführ-Vorrichtung, insbesondere Diesel-Brennkraftmaschine,
- wobei eine Abgasanlage (3) und eine Ansauganlage (4) der Brennkraftmaschine (1) über eine Abgasrückführ-Leitung (5) in Verbindung stehen,
**dadurch gekennzeichnet,**
- **daß** die Abgasrückführ-Leitung (5) mit einem Helmholtz-Resonator (6) ausgerüstet ist.

2. Brennkraftmaschine nach Anspruch 1, **dadurch gekennzeichnet, daß** der Helmholtz-Resonator (6) als ein am freien Ende (7) geschlossenes Reflexionsrohr (8) gestaltet ist.

3. Brennkraftmaschine nach Anspruch 1 und 2, **dadurch gekennzeichnet, daß** das als ein Blindrohr gestaltete Reflexionsrohr (8) in seiner Länge etwa ¼ der Wellenlänge der zu dämpfenden Frequenz entspricht.

4. Brennkraftmaschine nach den Ansprüchen 1 bis 3, **dadurch gekennzeichnet, daß** das Reflexionsrohr (8) in seinem Durchmesser etwa dem der Abgasrückführ-Leitung (5) entspricht.

5. Brennkraftmaschine nach den Ansprüchen 1 bis 4, **dadurch gekennzeichnet,**
- **daß** die Abgasrückführ-Leitung (5) von einer Längsseite zur anderen Längsseite der Brennkraftmaschine (1) vor einer deren Stirnseiten (14) verlaufend angeordnet ist, wobei
- ein freier Winkelabschnitt (15) des abgewinkelt gestalteten Reflexionsrohres (8) der abgasseitigen Längsseite der Brennkraftmaschine (1) benachbart verlaufend angeordnet ist.

## Claims

1. An internal combustion engine, especially a diesel engine, comprising an exhaust-gas recirculation device,
- wherein an exhaust gas system (3) and an intake system (4) of the engine (1) are connected by an exhaust-gas recirculation line (5),
**characterised in that**
- the exhaust-gas recirculation line (5) is equipped with a Helmholtz resonator (6).

2. An engine according to claim 1, **characterised in that** the Helmholtz resonator (6) is a reflection tube (8) closed at the free end (7).

3. An engine according to claims 1 and 2, **characterised in that** the reflection tube (8), which is a blind tube, has a length about one-quarter the wavelength of the frequency to be attenuated.

4. An engine according to claims 1 to 3, **characterised in that** the reflection tube (8) is approximately equal in diameter to the exhaust-gas recirculation line (5).

5. An engine according to claims 1 to 4, **characterised in that**
- the exhaust-gas recirculation line (5) extends from one to the other longitudinal side of the engine (1) in front of one of the endfaces (14) thereof, wherein
- a free bent portion (15) of the bent reflection tube (8) is disposed so that it extends near the longitudinal side of the engine (1) on the exhaust-gas side.

## Revendications

1. Moteur à combustion interne équipé d'un dispositif de recirculation des gaz d'échappement notamment un moteur diesel dans lequel :
- une installation d'échappement (3) et une installation d'admission (4) du moteur (1) sont reliées par une conduite de recirculation de gaz d'échappement (5),
**caractérisé en ce que**
- la conduite de recirculation de gaz d'échappement (5) est équipée d'un résonateur Helmholtz (6).

2. Moteur à combustion interne selon la revendication 1,
**caractérisé en ce que**
le résonateur Helmholtz (6) est un tube de réflexion (8) dont l'extrémité libre (7) est fermée.

3. Moteur à combustion interne selon l'une quelconque des revendications 1 et 2,
**caractérisé en ce que**
le tube de réflexion (8) en forme de tube aveugle a une longueur correspondant sensiblement à ¼ de la longueur d'onde de la fréquence à amortir.

4. Moteur à combustion interne selon l'une quelconque des revendications 1 à 3,
**caractérisé en ce que**
le diamètre du tube de réflexion (8) correspond sensiblement à celui de la conduite de recirculation de gaz d'échappement (5).

5. Moteur à combustion interne selon l'une quelconque des revendications 1 à 4,
**caractérisé en ce que**
- la conduite de recirculation des gaz d'échappement (5) passe d'un grand côté à l'autre du moteur (1) devant la face frontale (14) du moteur, et
- un segment coudé (15), libre du tube de réflexion (8) de forme coudée passe au voisinage du grand côté du moteur à combustion interne (1) du côté des gaz d'échappement.
